# EUROPEAN PATENT SPECIFICATION

(11) **EP 4 002 651 B1**
(45) Date of publication and mention of the grant of the patent: **17.12.2025**
(21) Application number: 20839962.6
(22) Date of filing: 21.05.2020
(51) Int. Cl.: H02K 5/08, H02K 5/173, H02K 11/40, H02K 5/06

(54) **MOLDED MOTOR**
GEFORMTER MOTOR
MOTEUR MOULÉ

(30) Priority: 17.07.2019 JP 2019131527
(43) Date of publication of application: 25.05.2022
(73) Proprietor: Panasonic Intellectual Property Management Co., Ltd., Osaka-shi, Osaka 540-6207 (JP)
(72) Inventor: OZAKI, Ikuo, Osaka-shi, Osaka 540-6207 (JP); NANBU, Yasuo, Osaka-shi, Osaka 540-6207 (JP); WATANABE, Akihiko, Osaka-shi, Osaka 540-6207 (JP)
(74) Representative: SSM Sandmair
(86) International application number: PCT/JP2020/020071
(87) International publication number: WO 2021/010015

(56) References cited:
- WO-A1-2018/159537
- WO-A1-2018/159537
- WO-A1-2018/179831
- WO-A1-2018/179831
- WO-A1-2018/179833
- JP-A- 2001 145 293
- JP-A- 2003 145 046
- JP-A- 2014 142 065
- JP-A- 2017 077 110

## Description

### TECHNICAL FIELD

The present disclosure relates to a mold motor in which a stator is covered with mold resin.

### BACKGROUND ART

In the case of a brushless motor driven by a pulse width modulation type inverter, a neutral point potential of a winding wire does not become zero, and therefore a potential difference (hereinafter, this potential difference is also appropriately referred to as an "axial voltage") is generated between an outer ring of a bearing and an inner ring of the bearing. If this axial voltage exceeds a dielectric breakdown voltage of an oil film inside the bearing, there is a problem that electric discharge occurs inside the bearing and electrolytic corrosion occurs in the bearing.

In order to prevent such electrolytic corrosion from occurring in the bearing, conventionally, there has been proposed a mold motor in which a bracket on an output shaft side and a bracket on an anti-output shaft side are short-circuited by a conductive tape to suppress the occurrence of electrolytic corrosion (see, for example, PTL 1). In this conventional mold motor, by short-circuiting in this manner, potentials of the both brackets are equalized, and generation of a circulating current through the outer ring of the bearing and the inner ring of the bearing is suppressed. This suppresses the occurrence of electrolytic corrosion.

On the other hand, such a mold motor generally is structured such that a stator configured by a coil formed by a winding wire wound around a stator core is further covered with a mold resin. When an excessive current flows through a coil having such a structure for some reason, the coil generates heat and has a high temperature, and an insulator provided for an outer peripheral surface of the conductive wire constituting the coil may melt, for example. When the insulator provided on the outer peripheral surface of the conductive wire melts, the conductive wire of the coil may possibly be short-circuited. In addition, when the conductive wire is short-circuited and generates a spark, the spark may possibly ignite a gas produced by heating an insulating resin such as the insulator provided between the coil and the stator core. Further, when the mold resin is thermally deteriorated due to heat generation of the coil and a crack or the like occurs in the mold resin, there is a possibility that the ignited fire leaks from the cracked portion of the mold resin to the outside of the motor.

Therefore, conventionally, in order to prevent such a defect, there has been proposed a mold motor provided with fire protection measures for preventing leakage of fire to the outside of the motor even if an excessive current flows through a coil in a stator while preventing electrolytic corrosion of a bearing (see, for example, PTL 2).

The conventional mold motor as disclosed in PTL 2 includes, as fire protection measures, an inner metallic cover surrounding an outer periphery of a coil end of a stator and provided within a mold resin, and an outer metallic cover surrounding the outer periphery of the coil end and provided on an outer surface of the mold resin. Further, as one of the countermeasures against electrolytic corrosion, the conventional mold motor is configured such that a pair of metal brackets each holding the bearing are electrically connected by a conductive member including an electric wire passing through the stator.

However, the method of electrically connecting the pair of metal brackets to each other described in PTL 2 requires a plurality of connection members such as conduction pins. Further, this method also requires a devise in processing for passing an electric wire through the stator, and thus a configuration for suppressing electrolytic corrosion becomes complicated. Further, WO 2018/179831 A1 discloses a mold motor comprising a rotor including a rotating shaft extending in an axial direction, and a rotating body that holds permanent magnets and is fixed to the rotating shaft; a stator that faces the rotor, and includes a stator core having a plurality of salient poles, and a plurality of coils respectively wound around the salient poles of the stator core via insulators; a pair of bearings configured to rotatably support the rotor; a pair of metal brackets configured to fix the pair of bearings ; a mold resin configured to cover the stator; a metal cover mounted on an outer surface of the mold resin; and a conductive member configured to electrically connect a first metal bracket among the pair of metal brackets with the metal cover, wherein the pair of metal brackets are electrically connected via the metal cover and the conductive member; the first metal bracket includes a cylindrical portion that holds one of the bearings, and a flange portion that extends outward from one end of the cylindrical portion, the cylindrical portion having a cylindrical shape, the flange portion being fixed to the mold resin, the metal cover includes a cover cylindrical portion, a cover top surface portion, and a cover hole, the cover cylindrical portion having a cylindrical shape and surrounding an outer periphery of the mold resin, the cover top surface portion constituting one end side of the cover cylindrical portion, the cover hole being defined in a center of the cover top surface portion, the cover hole defined in the metal cover has a diameter larger than a diameter of the cylindrical portion of the first metal bracket, the cylindrical portion of the first metal bracket penetrates the cover hole defined in the metal cover and protrudes from the cover hole; the mold motor further comprises a gap between an inner periphery of the cover top surface portion of the metal cover and the cylindrical portion of the first metal bracket penetrating the cover hole in the radial direction.

Also WO 2018/179833 A1 discloses such a mold motor.

### Citation List

### Patent Literature

PTL 1: Unexamined Japanese Patent Publication No. 2007-20348
PTL 2: International Publication No. 2018/159537 A

### SUMMARY OF THE INVENTION

The present disclosure has been made in view of such a problem, and an object of the present disclosure is to provide a mold motor capable of providing fire protection measures around a coil using a metal cover, and measures for suppressing electrolytic corrosion with a simple configuration using the metal cover.

The invention is defined by claim 1. In order to achieve the above object, a mold motor according to the present disclosure includes a rotor, a stator, a pair of bearings, a pair of metal brackets, a mold resin, and a metal cover. The mold motor further includes a conductive member. The rotor includes a rotating shaft extending in the axial direction, and a rotating body holding permanent magnets and fixed to the rotating shaft. The stator faces the rotor, and includes a stator core having a plurality of salient poles and a plurality of coils respectively wound around the salient poles of the stator core via insulators. The pair of bearings are respectively fixed to the pair of metal brackets, and rotatably support the rotor. The mold resin covers the stator. The metal cover is mounted on an outer surface of the mold resin. The conductive member electrically connects a first metal bracket among the pair of metal brackets with the metal cover. The pair of metal brackets are electrically connected via the metal cover and the conductive member.

With this configuration, since the metal cover is disposed so as to cover the coil ends of the coil, the insulators, and the connecting wire, it is possible to block fire or smoke produced within the motor. Further, since the pair of metal brackets are electrically connected using the metal cover, it is possible to suppress the occurrence of electrolytic corrosion of the bearing with a simple configuration.

Moreover, the first metal bracket includes a cylindrical portion that holds the bearing, and a flange portion that extends outward from one end of the cylindrical portion, the cylindrical portion having a cylindrical shape, the flange portion being fixed to the mold resin.

Furthermore, the metal cover includes a cover cylindrical portion, a cover top surface portion, and a cover hole, the cover cylindrical portion having a cylindrical shape and surrounding an outer periphery of the molding resin, the cover top surface portion constituting one end side of the cover cylindrical portion, the cover hole being defined in a center of the cover top surface portion.

Further, the cover hole defined in the metal cover has a diameter larger than a diameter of the cylindrical portion of the first metal bracket.

Moreover, the cylindrical portion of the first metal bracket penetrates the cover hole defined in the metal cover and protrudes from the cover hole.

Furthermore, a gap is provided between an inner periphery of the metal cover of the cover top surface portion and the cylindrical portion of the first metal bracket penetrating the cover hole in the radial direction, and the conductive member is provided in at least a part of the gap, and electrically connects the first metal bracket and the metal cover.

Further, the conductive member may be one of a metal piece and an electric wire, and the conductive member may be joined to the first metal bracket and the metal cover by one of welding, soldering, and a conductive adhesive.

Moreover, the conductive member may be a solder, and the first metal bracket and the metal cover are electrically connected by soldering such that the solder straddles the gap.

The conductive member may be one of a conductive rubber, a conductive sponge, and a plate spring having a spring property disposed in the gap.

The metal cover includes a cover projecting portion protruding outward in a hollow cylindrical shape from the inner periphery of the cover top surface portion. The cover projecting portion may include a plate spring portion provided by bending a part of the cover projecting portion. The plate spring portion may be in contact with the first metal bracket as the conductive member.

According to the present disclosure, it is possible to provide a mold motor capable of, while suppressing occurrence of electrolytic corrosion of a bearing with a simple configuration using a metal cover, preventing fire from leaking to the outside of the motor even if an excessive current flows through a coil wound around a stator core.

### BRIEF DESCRIPTION OF DRAWINGS

FIG. 1 is an exploded perspective view of a mold motor according to an exemplary embodiment.
FIG. 2 is a sectional view of the mold motor according to the exemplary embodiment.
FIG. 3 is a plan sectional view taken along line A-A in FIG. 2 of the mold motor according to the exemplary embodiment.
FIG. 4 is a perspective view of an external appearance of the mold motor according to the exemplary embodiment.
FIG. 5 is an enlarged sectional view near a first bracket that holds a bearing of the mold motor according to the exemplary embodiment.
FIG. 6 is an enlarged sectional view near a first bracket, illustrating a configuration (not part of the invention) of a first modification of the mold motor according to the exemplary embodiment.
FIG. 7 is an enlarged sectional view near a first bracket, illustrating a configuration of a second modification of the mold motor according to the exemplary embodiment.
FIG. 8 is an enlarged sectional view near a first bracket, illustrating a configuration of a third modification of the mold motor according to the exemplary embodiment.

### DESCRIPTION OF EMBODIMENT

Hereinafter, an exemplary embodiment of the present disclosure will be described in detail with reference to the drawings. Note that the present disclosure is not limited to the following exemplary embodiment. Furthermore, modifications can be made as appropriate without departing from the scope within which the effects of the present disclosure are exhibited.

### (Exemplary embodiment)

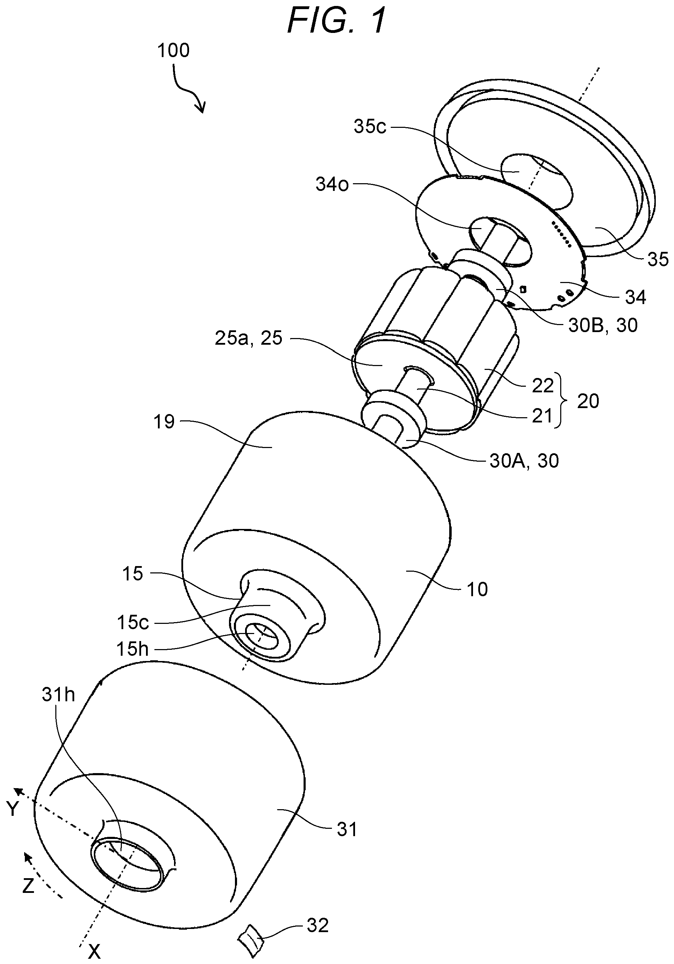

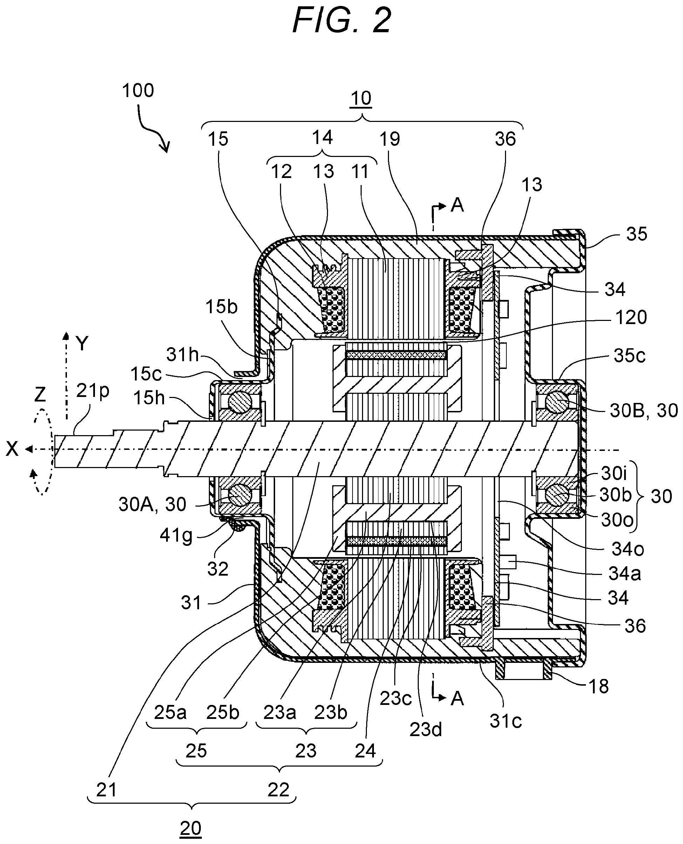

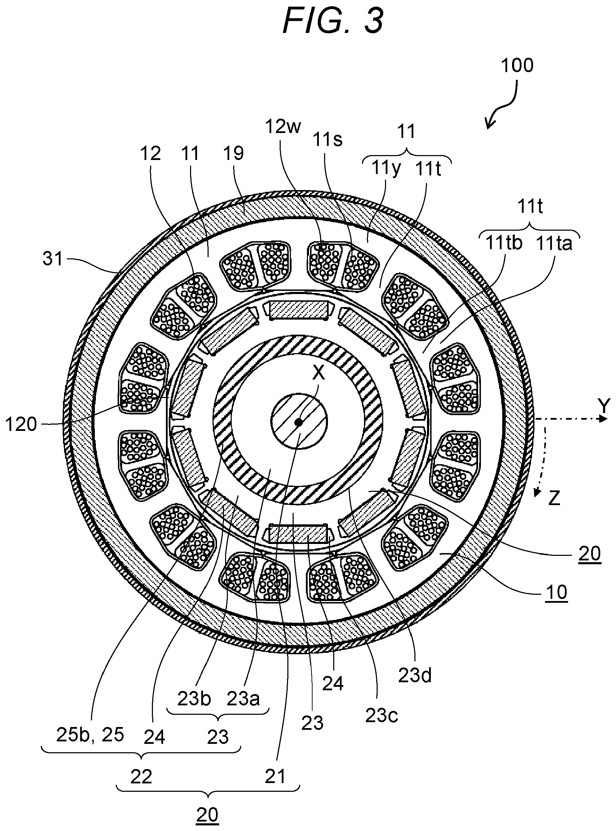

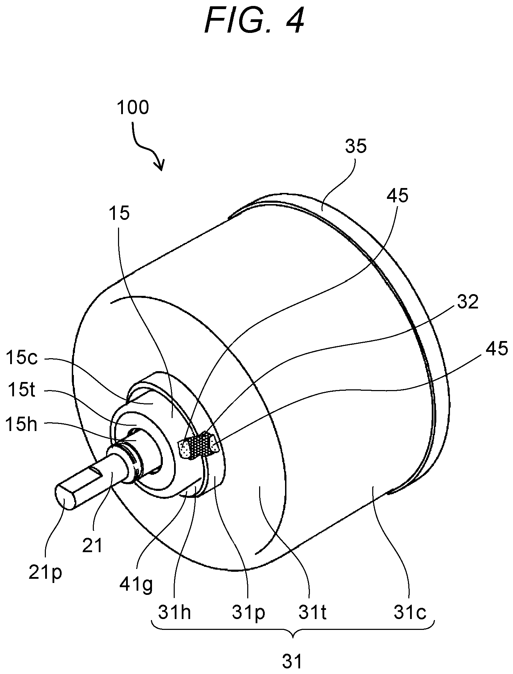

FIG. 1 is an exploded perspective view of mold motor (hereinafter, appropriately referred to as a motor) 100 according to the exemplary embodiment. FIG. 2 is a sectional view of motor 100 according to the exemplary embodiment. FIG. 3 is a plan sectional view of motor 100 taken along line A-A in FIG. 2 according to the exemplary embodiment. FIG. 4 is a perspective view of an external appearance of motor 100 according to the exemplary embodiment.

As illustrated in FIG. 1, motor 100 is a brushless motor including rotor 20 configured by inserting rotating shaft 21 into a center of rotating body 22, and stator 10 configured by covering a coil assembly with a molding resin, in which rotor 20 is supported by a pair of bearings 30. In the present exemplary embodiment, motor 100 will be described as one example of the brushless motor. Hereinafter, as illustrated in the drawings, a direction indicated by X in which rotating shaft 21 extends is referred to as axial direction X. In a plane orthogonal to axial direction X, as illustrated in FIG. 3, a direction extending from center X of rotating shaft 21 is referred to as radial direction Y, and Z direction circling around center point X is referred to as circumferential direction Z.

In the present exemplary embodiment, in order to prevent fire or smoke from leaking from a main body of motor 100 to the outside due to a defect such as an excessive current flowing through the coil, a metal member as a non-combustible countermeasure is provided for the mold resin. Specifically, as illustrated in FIG. 1, metal cover 31 made of metal and attached to stator 10 is used as the metal member.

Further, as an electrolytic corrosion countermeasure of the pair of bearings 30, rotor 20 is provided with a rotor insulating layer that is a layer for insulation between rotating shaft 21 and an outer peripheral surface of rotating body 22 outside in radial direction Y. In order to further enhance an electrolytic corrosion suppressing effect, outer rings of the pair of bearings 30 are electrically connected to each other. Specifically, in motor 100, in order to suppress electrolytic corrosion, first bracket 15 attached to one bearing 30A of the pair of bearings 30, and second bracket 35 attached to another bearing 30B of the pair of bearings 30 are electrically connected via metal cover 31 and conductive member 32 described below. In this manner, metal cover 31 for the non-combustible countermeasure is also used for the electrolytic corrosion countermeasure.

An overall configuration of motor 100 will be described. As illustrated in FIG. 1, motor 100 includes, as a basic configuration, stator 10 including first bracket 15 and covered with mold resin portion 19 that is a mold resin, rotor 20, bearings 30A, 30B that are a pair of bearings 30, second bracket 35, and circuit board 34. As described above, motor 100 includes metal cover 31 as the non-combustible countermeasure. Motor 100 further includes conductive member 32 for electrically connecting metal cover 31 and first bracket 15 as the electrolytic corrosion countermeasure.

As illustrated in FIG. 2, stator 10 includes coil assembly 14 including stator core 11, coils 12, and insulators 13. Coil assembly 14 is assembled by winding coils 12 respectively around the salient poles of stator core 11 with insulators 13 made of an insulating material interposed therebetween.

Stator core 11 is configured by, for example, laminating a plurality of thin iron plates in axial direction X. As illustrated in FIG. 3, stator core 11 also includes ring-shaped yoke 11y, and a plurality of teeth 11t as salient poles extending inward in radial direction Y from an inner peripheral surface of yoke 11y. The plurality of teeth 11t are arranged at equal intervals in circumferential direction Z while slots 11s, which are opening portions, are defined between the teeth. In the present exemplary embodiment, an example in which 12 teeth 11t are used and a number of slots is 12 is shown.

Tooth distal end portion 11tb extending in circumferential direction Z is provided at the extended distal end portion of each of teeth 11t so as to be wider than the extended tooth intermediate portion 11ta. An inner peripheral surface of tooth distal end portion 11tb is a magnetic pole surface facing an outer peripheral surface of rotor 20. Coils 12 are formed by performing a process to stator core 11 having such a configuration of winding winding wire 12w around each of teeth 11t while winding wire 12w is passed through opening space of slots 11s. Further, coils 12 are connected by connecting wires (not shown) that connect coils 12 to each other. As illustrated in FIG. 2, terminal cap 36 including a metal pin (not shown) that is an electrical connection terminal is attached to insulators 13. A wire terminal of predetermined one of coils 12 is connected to this metal pin. Coils 12 for respective teeth 11t are energized and driven by, for example, three-phase AC including a U phase, a V phase, and a W phase electrically different from each other by 120 degrees.

Stator 10 includes first bracket 15 disposed so as to protrude in axial direction X from a body portion of stator 10. Stator 10 is integrally molded with a molding resin such that coil assembly 14, first bracket 15, and terminal cap 36 are disposed at predetermined positions, and these members are covered with a resin material except for some exposed portions. The resin material is not particularly limited, and for example, an epoxy resin, a polyester resin, or the like having excellent heat conductivity can be used.

In this way, stator 10 including mold resin portion 19 in which these members are integrated with the mold resin is configured. Stator 10 has a substantially cylindrical shape, and wiring holder 18 for passing a connection line such as a power supply line is also defined in a part of a cylindrical surface of the stator. As the exposed portion, an inner peripheral surface of each of teeth 11t and a terminal surface of terminal cap 36 are exposed from mold resin portion 19. One of both circular ends of stator 10 is closed, and first bracket 15 is disposed so as to protrude as described above. The other end is open, and second bracket 35 is mounted so as to cover this opening.

As illustrated in FIG. 1 to FIG. 3, rotor 20 is inserted inside stator 10 at a predetermined interval in radial direction Y. That is, motor 100 is an inner rotor type motor in which rotor 20 is disposed inside stator 10. An inner peripheral surface of stator 10 and an outer peripheral surface of rotor 20 face each other in radial direction Y with slight void 120 interposed between the inner peripheral surface and the outer peripheral surface. Hereinafter, an example of inner rotor type motor 100 will be described.

Rotor 20 includes rotating body 22 that holds magnets 24 around rotating shaft 21 rotatably held by a pair of bearings 30. As illustrated in FIG. 2, each of bearings 30 is a ball bearing having a plurality of small-diameter balls 30b. That is, each of bearings 30 has a configuration in which balls 30b are inserted between annular outer ring 30o and annular inner ring 30i smaller than the annular outer ring. The pair of bearings 30 rotatably support rotor 20. The pair of bearings 30A, 30B are fixed by a pair of metal brackets (hereinafter, simply referred to as brackets as appropriate) 15, 35 made of metal. More specifically, outer ring 30o of one bearing 30A of bearings 30 is fixed by first bracket 15, and outer ring 30o of another bearing 30B is fixed by second bracket 35. Rotating shaft 21 is fixed to inner rings 30i.

As illustrated in FIG. 2, rotating body 22 includes rotor core 23, magnets 24, and rotor resin portion 25. Rotor core 23 is configured by, for example, laminating a plurality of thin iron plates in axial direction X. Rotor core 23 is fixed to rotating shaft 21 substantially at the center of rotating shaft 21. Magnets 24 are permanent magnets. Magnets 24 are disposed inside rotor core 23.

As illustrated in FIG. 2 and FIG. 3, a plurality of magnet insertion holes 23c penetrating in axial direction X are defined in rotor core 23 at equal intervals in circumferential direction Z. Magnets 24 are respectively inserted into magnet insertion holes 23c. The present exemplary embodiment shows motor 100 of an interior permanent magnet (IPM) type in which magnets 24 are included in such rotor core 23. The example is illustrated in which 10 magnets 24 are arranged such that S poles and the N poles of magnets 24 are alternately arranged in circumferential direction Z, and a number of magnetic poles is 10. That is, the present exemplary embodiment exemplifies a 10-pole and 12-slot brushless motor as motor 100.

As illustrated in FIG. 2, in rotating body 22, rotor resin portion 25 made of resin is provided such that rotor core 23 and each of magnets 24 are integrated. Magnets 24 are held by rotor core 23 with rotor resin portion 25. Rotor resin portion 25 functions as a rotor insulating layer as described above, and to suppress electrolytic corrosion. For this purpose, rotor core 23 is provided with resin through hole 23d penetrating in axial direction X. Examples of a specific material of rotor resin portion 25 to be used include a polystyrene resin such as syndiotactic polystyrene (SPS), and a polyester resin such as polybutylene terephthalate (PBT) and polyethylene terephthalate (PET).

Rotor resin portion 25 is provided with end plate resin portions 25a in a disk shape disposed so as to sandwich respective magnets 24 in axial direction X at both ends in axial direction X. Further, resin through hole 23d of rotor core 23 is also filled with a resin material. As a result, end plate resin portions 25a at both ends are connected by the resin in axial direction X. The resin material filled in resin through hole 23d constitutes internal resin portion 25b as a part of rotor resin portion 25. Both end openings of each of magnet insertion holes 23c are closed by rotor resin portion 25, and each of magnets 24 is reliably fixed to rotor core 23. According to this configuration, it is possible to prevent magnets 24 from coming into contact with water, even when motor 100 is used for a device in contact with rainwater, dew condensation water, or the like, such as a device used in wet rooms or an outdoor unit of an air conditioner.

Resin through hole 23d penetrates rotor core 23 in axial direction X, and has an annular shape circling around rotating shaft 21 in radial direction Y as illustrated in FIG. 3. That is, resin through hole 23d is disposed so as to extend inside of rotor core 23, as a cylindrical space from one end to the other end. The resin of rotor resin portion 25 is filled in resin through hole 23d to provide internal resin portion 25b. As described above, since internal resin portion 25b has a cylindrical shape, rotor core 23 is separated into inner rotor core 23a on an inner side and outer rotor core 23b on an outer side, as can be seen from FIG. 2 and FIG. 3. Internal resin portion 25b is made of a resin material that is an electrically insulating body. Therefore, in rotor core 23, inner rotor core 23a and outer rotor core 23b, that is, rotating shaft 21 and an outer peripheral surface of rotating body 22 on the outer side in radial direction Y, are electrically insulated and separated by internal resin portion 25b. By insulation separation in this manner, internal resin portion 25b in rotor resin portion 25 functions as rotor insulating layer as described above. As a result, the insulating layer by internal resin portion 25b is inserted in rotor 20. As a result, impedance on a side of rotor 20 increases as compared with a configuration in which no insulating layer is inserted. As described above, according to the present exemplary embodiment, impedance on the side of rotor 20 is increased to approximate impedance on a side of stator 10, and thus the occurrence of electrolytic corrosion in bearings 30 is suppressed.

As described above, rotor 20 includes rotating body 22 having a columnar shape as illustrated in FIG. 1, and rotating shaft 21 penetrating the center of rotating body 22. In the above description, motor 100 including IPM type rotor 20 that holds magnets 24 in rotor core 23 has been described. However, the motor may include a surface permanent magnet motor type (SPM type) rotor that holds magnets 24 on an outer peripheral surface of rotor core 23.

Further, as described above, rotating shaft 21 is supported by bearings 30A, 30B. Bearings 30A, 30B are disposed on respective sides of stator 10 in the axial direction, and are respectively fixed via first bracket 15 and second bracket 35 made of metal.

Next, an outline of first bracket 15 and second bracket 35 will be described.

As illustrated in FIG. 1 and FIG. 2, second bracket 35 has a substantially disk shape, and is attached so as to be mountable on an opening side of stator 10. Cylindrical portion 35c recessed in a cylindrical shape is provided at a central portion of second bracket 35. Bearing 30B is held by cylindrical portion 35c. That is, when second bracket 35 in a state where bearing 30B is inserted into cylindrical portion 35c is attached to the opening side of stator 10, one side of rotating shaft 21 is rotatably supported. In particular, in the present exemplary embodiment, second bracket 35 is attached to stator 10 to which metal cover 31 is attached such that second bracket 35 covers the opening of stator 10 in that state. As a part of countermeasure for suppressing electrolytic corrosion, an outer periphery of second bracket 35 is brought into direct contact with an opening end of metal cover 31 in this manner, and thus second bracket 35 and metal cover 31 are electrically connected.

First bracket 15 has a diameter smaller than that of second bracket 35, and cylindrical portion 15c recessed in a cylindrical shape for holding bearing 30A is provided at a central portion of first bracket 15, similarly to second bracket 35. First bracket 15 has flange portion 15b in a disk shape and expanding in radial direction Y in a flange shape on an opening side of cylindrical portion 15c. First bracket 15 is fixed to mold resin portion 19 of stator 10 by molding. By inserting bearing 30Ainto cylindrical portion 15c of first bracket 15, the other side of rotating shaft 21 is rotatably supported with respect to stator 10. Further, hole 15h is defined in the center of first bracket 15, and rotating shaft 21 protrudes outward through hole 15h. The protruding portion of rotating shaft 21 serves as output shaft 21p for connecting a load or the like. Hereinafter, in axial direction X, a side on which output shaft 21p is disposed will be referred to as an output shaft side, and the opposite side will be referred to as an anti-output shaft side.

An outline of metal cover 31 attached to stator 10 will be described.

In the present exemplary embodiment, as the non-combustible countermeasure, metal cover 31 made of metal is attached to an outer surface of mold resin portion 19 of stator 10 so as to cover stator 10 substantially entirely except for the opening of stator 10 as described above. As illustrated in FIG. 1, metal cover 31 has a hollow cup shape having a hole opening in the center as cover hole 31h. Metal cover 31 is attached to stator 10 such that first bracket 15 fixed to mold resin portion 19 penetrates cover hole 31h of metal cover 31. Moreover, as a part of the countermeasure for suppressing electrolytic corrosion as described above, first bracket 15 and second bracket 35 are electrically connected by metal cover 31 and conductive member 32. A detailed configuration for electrical connection between metal cover 31 and both brackets 15, 35 will be further described below.

Further, as illustrated in FIG. 2, motor 100 incorporates circuit board 34 on the opening side of stator 10. Circuit board 34 has a substantially disk shape. Opening 34o through which rotating shaft 21 passes is defined in a central portion of circuit board 34. Electronic components 34a such as a drive circuit are mounted on circuit board 34. A connection line and the like for applying a power supply voltage and a control signal is also connected to circuit board 34. The connection line for connecting with outside is drawn out to the outside through wiring holder 18.

In order to pull out wire terminals of coils 12 from inside of mold resin portion 19 of stator 10, terminal cap 36 integrated with mold resin portion 19 is disposed in an inner space on the opening side of stator 10. Terminal cap 36 is made of an insulating resin. Terminal cap 36 is a member including an arrangement plate portion for arranging electrical connection terminals such as pins. The wire terminals of coils 12 and the like are connected to these electrical connection terminals. In the inner space of stator 10, for example, portions exposed from the pins are used to be electrically connected with circuit board 34. Circuit board 34 is held by terminal cap 36.

Motor 100 configured as described above is provided by the following procedure. As illustrated in FIG. 1 and FIG. 2, stator 10 is provided by arranging coil assembly 14, first bracket 15, and terminal cap 36 at predetermined positions in a mold, and integrally molding these components with a resin. Bearings 30A and 30B are attached to respective sides of rotating shaft 21 of rotor 20. Rotor 20 to which bearings 30A, 30B are attached is inserted into stator 10 such that output shaft 21p protrudes from hole 15h of first bracket 15. Bearing 30A is press-fitted into cylindrical portion 15c of first bracket 15. Metal cover 31 is attached from a side of first bracket 15 of stator 10 such that first bracket 15 into which bearing 30A is press-fitted passes through cover hole 31h of metal cover 31 and protrudes from metal cover 31. Circuit board 34 is fixed to terminal cap 36 on the opening side of stator 10. The connection line connected to circuit board 34 is drawn out to the outside through wiring holder 18. Bearing 30B is press-fitted into cylindrical portion 35c of second bracket 35. At the same time, second bracket 35 is attached so as to cover the opening side of stator 10 to which metal cover 31 is attached. At this time, the opening end of metal cover 31 and an outer peripheral side of second bracket 35 come into contact with each other, and metal cover 31 and second bracket 35 are electrically connected. Finally, at a gap between metal cover 31 and first bracket 15, conductive member 32 is fixed to metal cover 31 and first bracket 15 by welding, soldering, or the like.

In this way, motor 100 as illustrated in FIG. 2 is completed.

In particular, in the present exemplary embodiment, by fixing conductive member 32 as described above, metal cover 31 and first bracket 15 are also electrically connected via conductive member 32. As a result, first bracket 15 and second bracket 35 are electrically connected via metal cover 31. This, in turn, electrically connects outer ring 30o of bearing 30A and outer ring 30o of bearing 30B. The electrical connection between outer rings 30o of bearings 30A, 30B enhances the electrolytic corrosion suppressing effect.

In motor 100 configured as described above, by supplying a power supply voltage, a control signal, or the like to the drive circuit mounted on circuit board 34 via the connection line, coils 12 are energized and driven. Upon energization of coils 12, a drive current flows through coils 12, and a magnetic field is generated from stator core 11. Then, due to an alternating magnetic field from stator core 11 and the magnetic field from magnets 24 of rotor 20, an attractive force and a repulsive force are generated according to the polarities of the magnetic fields. These forces cause rotor 20 to rotate in circumferential direction Z about rotating shaft 21.

Next, a detailed configuration in which in motor 100 configured as described above, for the purpose of the electrolytic corrosion countermeasure, first bracket 15 and second bracket 35 are electrically connected to each other via metal cover 31 and conductive member 32 will be described.

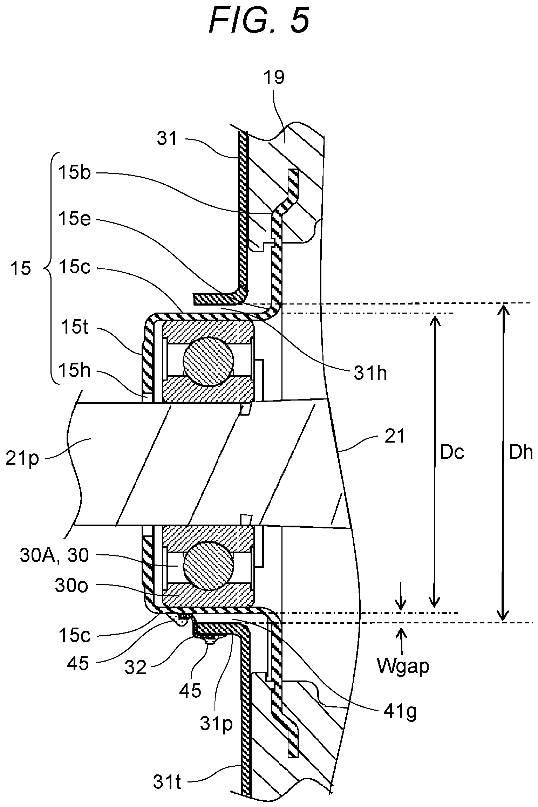

FIG. 5 is an enlarged sectional view near first bracket 15 holding bearing 30A in mold motor 100 according to the exemplary embodiment. Hereinafter, a configuration of electrical connection between both of the brackets will be described with reference mainly to FIG. 4 and FIG. 5.

First, as illustrated in FIG. 5, first bracket 15 is provided with, in addition to cylindrical portion 15c and flange portion 15b described above, top surface portion 15t serving as an annular surface having hole 15h on the output shaft side of cylindrical portion 15c. In first bracket 15, the outer peripheral side of flange portion 15b spreading in a disk shape is fixed to the output shaft side of mold resin portion 19 by molding. Cylindrical portion 15c extends in a cylindrical shape toward the output shaft side from opening end 15e on the inner peripheral side of flange portion 15b. FIG. 5 illustrates an example in which a diameter of the outer periphery of cylindrical portion 15c is diameter Dc. Cylindrical portion 15c holds bearing 30A within cylindrical portion 15c, so as to surround bearing 30A while cylindrical portion 15c is in contact with the outer periphery of outer ring 30o of bearing 30A. Further, top surface portion 15t in an annular shape is provided from an end portion of the output shaft side toward the center in radial direction Y of cylindrical portion 15c. Moreover, hole 15h that is a hole opening in a circular shape is defined at the center of top surface portion 15t. Rotating shaft 21 penetrates hole 15h and further protrudes from hole 15h as output shaft 21p.

On the other hand, metal cover 31 has a hollow cup shape as a whole. Specifically, as illustrated in FIG. 4, metal cover 31 includes cover cylindrical portion 31c, cover top surface portion 31t, cover hole 31h, and cover projecting portion 31p. Cover cylindrical portion 31c has a cylindrical shape as illustrated in FIG. 1, and has an end portion on the anti-output shaft side is opened to provide a cover opening. As illustrated in FIG. 2, cover cylindrical portion 31c entirely surrounds the outer periphery of mold resin portion 19. As described above, in the present exemplary embodiment, as the non-combustible countermeasure, metal cover 31 covers coil ends of stator 10, insulators 13, and the connecting wire. Therefore, for example, even if fire is caused by layer short or the like and the fire is about to spread from insulators 13 or the connecting wire to the outer peripheral side in radial direction Y, the fire and smoke are blocked by metal cover 31. Based on such a non-combustible countermeasure, fire and smoke are prevented from coming outside motor 100.

As illustrated in FIG. 4, in metal cover 31, cover top surface portion 31t serving as an annular surface is provided from an end of the output shaft side of cover cylindrical portion 31c toward the center in radial direction Y. At the center of cover top surface portion 31t, cover hole 31h that is a hole opening in a circular shape is defined. Metal cover 31 has cover projecting portion 31p protruding outward in a hollow cylindrical shape from the inner periphery of cover top surface portion 31t. Cover hole 31h is defined within cover projecting portion 31p. FIG. 5 illustrates an example in which a size of a diameter of cover hole 31h, that is, an inner diameter of cover projecting portion 31p is diameter Dh. As illustrated in FIG. 5, annular gap 41g having gap Wgap in radial direction Y is defined between cover hole 31h (that is, an inner periphery of cover top surface portion 31t) having diameter Dh and cylindrical portion 15c (hereinafter, appropriately referred to as bracket cylindrical portion 15c) of first bracket 15 having the outer periphery having diameter Dc, and bracket cylindrical portion 15c protrudes from cover hole 31h toward the output shaft side.

At the time of assembling motor 100, metal cover 31 is attached to stator 10 with bracket cylindrical portion 15c protruding from cover hole 31h in this manner. At this time, if an outer diameter of temporary bracket cylindrical portion 15ca is equal to or larger than the diameter of temporary cover hole 31ha (that is, the inner diameter of temporary cover projecting portion 31pa), metal cover 31 is attached to stator 10 by so-called "interference fit". According to such an interference fit, by simply press-fitting bracket cylindrical portion 15ca into cover hole 31ha, it is possible to fix and electrically connect bracket cylindrical portion 15ca and cover hole 31ha. However, on the other hand, cover projecting portion 31pa acts on bracket cylindrical portion 15ca holding bearing 30A inside, such that bracket cylindrical portion 15ca is tightened in this state. For this reason, inward stress in radial direction Y is also applied to bearing 30A held inside bracket cylindrical portion 15ca. The stress may cause bearing 30A to be deformed or displaced from a reference position, and may cause problems such as axial displacement or hindrance of normal rotation operation.

Therefore, in the present embodiment, diameter Dh of cover hole 31h and diameter Dc of the outer periphery of bracket cylindrical portion 15c are set such that the outer diameter of bracket cylindrical portion 15c is smaller than the diameter of cover hole 31h. Specifically, it is set such that diameter Dh > diameter Dc is satisfied, and as described above, annular gap 41g having gap Wgap in radial direction Y is defined between the inner periphery of cover projecting portion 31p and cover top surface portion 31t both having diameter Dh and the outer periphery of bracket cylindrical portion 15c having diameter Dc. As a result, when metal cover 31 is attached to stator 10, bracket cylindrical portion 15c is fitted into cover hole 31h inside cover projecting portion 31p by so-called "clearance fit". Since the setting is such that gap 41g is defined between the two, cover projecting portion 31p may not act to apply any force to bracket cylindrical portion 15c holding bearing 30A inside at the time of fitting. Here, as a structure for fixing metal cover 31 to stator 10, the inner diameter of cover cylindrical portion 31c is substantially equal to the outer diameter of mold resin portion 19 such that cover cylindrical portion 31c may be fitted into the outer periphery of mold resin portion 19. That is, metal cover 31 is fitted in and fixed to stator 10 by the interference fit of mold resin portion 19 to the inside of cover cylindrical portion 31c as described above. As a result, cover cylindrical portion 31c acts on mold resin portion 19 so as to apply inward stress. However, in the case of mold resin portion 19, as compared with bearing 30 directly supporting rotating shaft 21, there is no problem such as being affected by axial deviation or rotating operation.

In this manner, annular gap 41g is defined between the inner periphery of cover projecting portion 31p and the outer periphery of cylindrical portion 15c of first bracket 15. On the other hand, as described above, it is necessary to electrically connect metal cover 31 and first bracket 15 as the electrolytic corrosion countermeasure. Therefore, conductive member 32 is used for electrical connection. As one example, as illustrated in FIG. 4 and FIG. 5, conductive member 32 electrically connects cover projecting portion 31p of metal cover 31 and cylindrical portion 15c of first bracket 15 to each other such that conductive member 32 straddles gap 41g. As conductive member 32, in the case of FIG. 4 and FIG. 5, conductive member 32 using a small metal piece such as copper or iron is exemplified. In addition, since it is sufficient to provide connection electrically, an electric wire for electrical connection such as a lead wire may be used as conductive member 32. Furthermore, welding, soldering, a conductive adhesive, or the like may be used as a method of joining conductive member 32 that is the small metal piece or the electric wire to cover projecting portion 31p or cylindrical portion 15c. In the case of FIG. 4 and FIG. 5, an example in which a metal piece as conductive member 32 is joined to cover projecting portion 31p and cylindrical portion 15c by soldering using solder 45 is exemplified.

As described above, by attaching second bracket 35 so as to cover stator 10 to which metal cover 31 is attached, the outer peripheral side of second bracket 35 comes into contact with the opening end of metal cover 31, and metal cover 31 and second bracket 35 are electrically connected. Thereafter, as described above, metal cover 31 and first bracket 15 are electrically connected via conductive member 32 using conductive member 32. As a result, first bracket 15 and second bracket 35 are electrically connected via metal cover 31, and thus, outer ring 30o of bearing 30A within cylindrical portion 15c of first bracket 15 and outer ring 30o of bearing 30B within cylindrical portion 35c of second bracket 35 are electrically connected.

In the present exemplary embodiment, by adopting such a configuration, the potentials of outer ring 30o of bearing 30A and outer ring 30o of bearing 30B are equalized. Therefore, high-frequency current that contributes to electrolytic corrosion flowing through bearings 30A, 30B is suppressed. Further, with this, the axial voltages of both bearings 30A, 30B (the potential difference between the outer ring and the inner ring of the bearing) are also equalized. Therefore, life duration of both bearings 30A, 30B due to the electrolytic corrosion also approximate to each other. For this reason, it is possible to prevent such a problem that the occurrence of electrolytic corrosion concentrates on the bearing on a side whose axial voltage is high and life duration of the motor also depends on the bearing. As a result, it is possible to extend life duration of the motor. In this manner, as a result of electrical connection between outer rings 30o of both bearings 30A, 30B, a high effect of preventing electrolytic corrosion can be obtained.

In the above description, an example in which conductive member 32 of the small metal piece or the electric wire is connected to cover projecting portion 31p and cylindrical portion 15c using welding or soldering has been described. However, other modifications may be made.

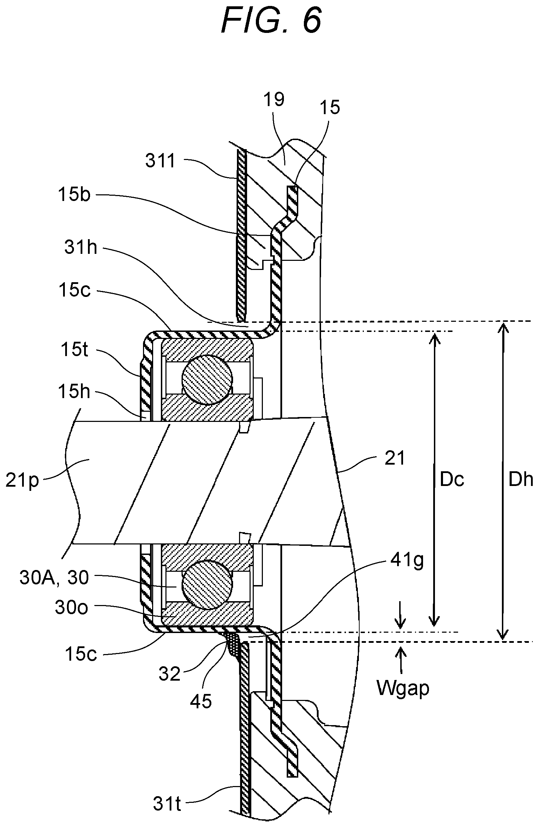

FIG. 6 is an enlarged sectional view near first bracket 15 illustrating a configuration of a first modification of the mold motor according to the exemplary embodiment. FIG. 6 illustrates an example of using metal cover 311 in which cover projecting portion (31p) is omitted. FIG. 6 shows a configuration example in which conductive member 32 is solder 45, and a portion near cover hole 31h of cover top surface portion 31t and bracket cylindrical portion 15c are soldered by solder 45 such that solder 45 straddles gap 41g. As described above, in metal cover 311 according to the present exemplary embodiment, cover projecting portion 31p may be omitted. In addition, as shown in FIG. 5, metal cover 31 may be configured to have cover projecting portion 31p, and soldering is carried out only by solder 45 straddling gap 41g between cover projecting portion 31p and bracket cylindrical portion 15c.

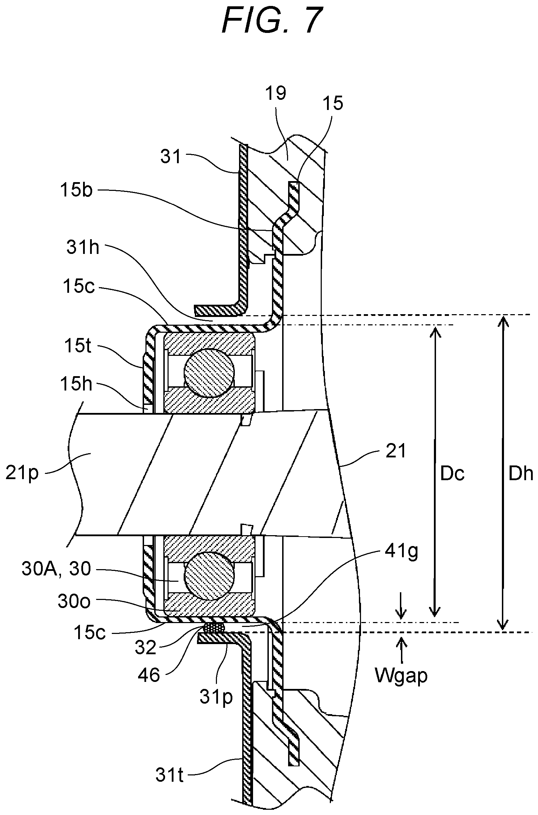

FIG. 7 is an enlarged sectional view near first bracket 15 illustrating a configuration of a second modification of the mold motor according to the exemplary embodiment. The second modification shows an example in which a conductive rubber or a conductive sponge having elasticity compared to metal is used as conductive member 32. FIG. 7 illustrates an example in which conductive member 32 is conductive rubber 46, and conductive rubber 46 is disposed so as to be sandwiched in gap 41g between cover projecting portion 31p and bracket cylindrical portion 15c. In the second modification, cover projecting portion 31p and bracket cylindrical portion 15c are electrically connected in this manner. In particular, in the case of the second modification, conductive rubber 46 has elasticity. Therefore, the inward stress in radial direction Y may not strongly applied from cover projecting portion 31p to bearing 30Ainside bracket cylindrical portion 15c via conductive rubber 46. Therefore, the mold motor may have the configuration of the second modification.

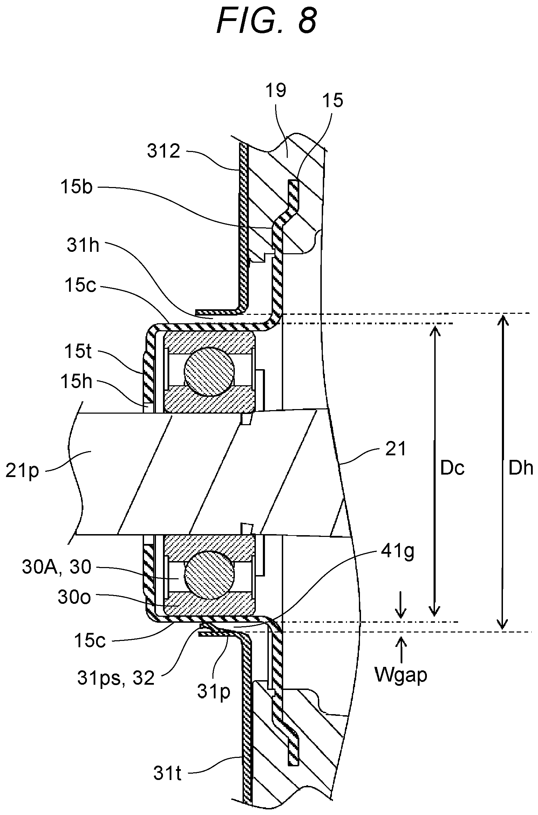

FIG. 8 is an enlarged sectional view near first bracket 15 illustrating a configuration of a third modification of the mold motor according to the exemplary embodiment. The third modification shows an example in which a part of cover projecting portion 31p is processed to provide plate spring portion 31ps. That is, two portions of cover projecting portion 31p are notched in axial direction X, and a portion remaining between the notches is bent in radial direction Y inwardly to provide plate spring portion 31ps having a spring property. Further, FIG. 8 illustrates an example in which the plate thickness of cover projecting portion 31p is reduced in order to enhance the spring property, and a tip of plate spring portion 31ps is bent in a curved shape so as to protrude inward in order to alleviate the stress on bracket cylindrical portion 15c. By attaching metal cover 312 having plate spring portion 31ps to stator 10, plate spring portion 31ps is located in gap 41g between cover projecting portion 31p and bracket cylindrical portion 15c as illustrated in FIG. 8, and cover projecting portion 31p and bracket cylindrical portion 15c are electrically connected via plate spring portion 31ps. That is, in the third modification, plate spring portion 31ps is conductive member 32 for electrically connecting metal cover 31 and first bracket 15. In the case of the third modification, similarly to the second modification, plate spring portion 31ps has elasticity. Therefore, the inward stress in radial direction Y may not strongly applied from cover projecting portion 31p to bearing 30A inside bracket cylindrical portion 15c via plate spring portion 31ps. Therefore, it is possible to employ the configuration of the third modification. Further, in third modification, the example in which a part of cover projecting portion 31p is processed has been described. However, instead of such processing, it is possible to employ a configuration in which a thin metal plate having a spring property is sandwiched in gap 41g between cover projecting portion 31p and bracket cylindrical portion 15c. Specifically, a thin phosphor bronze plate may be bent into a V shape and inserted into gap 41g.

As described above, motor 100 of the present exemplary embodiment includes metal cover 31 as the non-combustible countermeasure.

As described above, metal cover 31 is fitted so as to surround the outer periphery of stator 10. As a result, metal cover 31 is disposed such that metal cover 31 covers the coil ends of coils 12, insulators 13, and the connecting wire. Thus, metal cover 31 can block fire or smoke generated inside motor 100.

Furthermore, in the present exemplary embodiment, as described above, first bracket 15 holding bearing 30A and second bracket 35 holding bearing 30B are electrically connected as a part of the electrolytic corrosion countermeasure. Metal cover 31 is also used in this connection. This eliminates the need for wiring for electrical connection of the brackets. In particular, in the present exemplary embodiment, annular gap 41g in an annular shape is provided between the inner periphery of cover projecting portion 31p of metal cover 31 and the outer periphery of bracket cylindrical portion 15c of first bracket 15. Therefore, no stress is applied from cover projecting portion 31p to bearing 30A of bracket cylindrical portion 15c. Therefore, it is possible to prevent malfunction of the motor due to axial deviation or the like.

As described above, mold motor 100 according to the present exemplary embodiment includes rotor 20, stator 10, the pair of bearings 30, the pair of metal brackets 15, 35, the mold resin, and metal cover 31. Mold motor 100 further includes conductive member 32. Rotor 20 includes rotating shaft 21 extending in the axial direction, and rotating body 22 holding permanent magnets and fixed to rotating shaft 21. Stator 10 faces rotor 20, and includes a stator core 11 having a plurality of salient poles and a plurality of coils 12 respectively wound around the salient poles of stator core 11 via insulators 13. The pair of bearings 30 are respectively fixed to the pair of metal brackets 15, 35, and rotatably support rotor 20. The mold resin covers stator 10. Metal cover 31 is mounted on the outer surface of the mold resin. Conductive member 32 electrically connects first metal bracket 15 among the pair of metal brackets 15, 35 with metal cover 31. The pair of metal brackets 15, 35 are electrically connected via metal cover 31 and conductive member 32.

As a result, since metal cover 31 is disposed so as to cover the coil ends of coils 12, insulators 13, and the connecting wire, it is possible to block fire or smoke produced within the motor. Further, since the pair of metal brackets 15, 35 are electrically connected using metal cover 31, it is possible to suppress the occurrence of electrolytic corrosion of bearings 30 with a simple configuration.

Moreover, first metal bracket 15 includes a cylindrical portion 15c that has a cylindrical shape and holds bearing 30, and flange portion 15b that extends outward from one end of cylindrical portion 15c and is fixed to the mold resin.

Furthermore, metal cover 31 includes cover cylindrical portion 31c, cover top surface portion 31t, and cover hole 31h, cover cylindrical portion 31c having a cylindrical shape and surrounding the outer periphery of the molding resin, cover top surface portion 31t constituting one end side of cover cylindrical portion 31c, cover hole 31h being defined in the center of cover top surface portion 31t.

Further, cover hole 31h defined in metal cover 31 has the diameter larger than the diameter of cylindrical portion 15c of first metal bracket 15.

Moreover, cylindrical portion 15c of first metal bracket 15 penetrates cover hole 31c defined in metal cover 31 and protrudes from cover hole 31h.

Furthermore, gap 41g is provided between the inner periphery of cover top surface portion 31t of metal cover 31 and cylindrical portion 15c of first metal bracket 15 penetrating cover hole 31h in the radial direction, and conductive member 32 is provided in at least a part of gap 41g and electrically connects first metal bracket 15 and metal cover 31.

Further, conductive member 32 may be one of a metal piece and an electric wire, and may be joined to first metal bracket 15 and metal cover 31 by any of welding, soldering, and a conductive adhesive.

Moreover, conductive member 32 may be solder, and first metal bracket 15 and metal cover 31 may be electrically connected by soldering such that the solder straddles the gap.

Furthermore, conductive member 32 may be any of a conductive rubber, a conductive sponge, and a plate spring having a spring property disposed in the gap.

Further, metal cover 31 includes cover projecting portion 31p protruding outward in a hollow cylindrical shape from the inner periphery of cover top surface portion 31t. Cover projecting portion 31p may include a plate spring portion 31ps provided by bending a part of cover projecting portion 31p. Plate spring portion 31ps may be in contact with first metal bracket 15 as conductive member 32.

### INDUSTRIAL APPLICABILITY

The present disclosure may be used in a wide variety of application for a so-called mold motor in which a stator is covered with a mold resin.

### REFERENCE MARKS IN THE DRAWINGS

- 10: stator
- 11: stator core
- 11s: slot
- 11t: tooth
- 11y: yoke
- 11ta: tooth intermediate portion
- 11tb: tooth distal end portion
- 12: coil
- 12w: winding wire
- 13: insulator
- 14: coil assembly
- 15: first bracket (bracket)
- 15b: flange portion
- 15c, 35c: cylindrical portion (bracket cylindrical portion)
- 15e: opening end
- 15h: hole
- 15t: top surface portion
- 18: wiring holder
- 19: mold resin portion
- 20: rotor
- 21: rotating shaft
- 21p: output shaft
- 22: rotating body
- 23: rotor core
- 23a: inner rotor core
- 23b: outer rotor core
- 23c: magnet insertion hole
- 23d: resin through hole
- 24: magnet
- 25: rotor resin portion
- 25a: end plate resin portion
- 25b: internal resin portion
- 30, 30A,: 30B bearing
- 30b: ball
- 30i: inner ring
- 30o: outer ring
- 31, 311, 312: metal cover
- 31c: cover cylindrical portion
- 31h: cover hole
- 31p: cover projecting portion
- 31ps: plate spring portion
- 31t: cover top surface portion
- 32: conductive member
- 34: circuit board
- 34a: electronic component
- 34o: opening
- 35: second bracket (bracket)
- 36: terminal cap
- 41g: gap
- 45: solder
- 46: conductive rubber
- 100: motor
- 120: void

## Claims

1. A mold motor (100) comprising:
a rotor (20) including a rotating shaft (21) extending in an axial direction, and a rotating body (22) that holds permanent magnets (24) and is fixed to the rotating shaft (21);
a stator (10) that faces the rotor (20), and includes a stator core (11) having a plurality of salient poles, and a plurality of coils (12) respectively wound around the salient poles of the stator core (11) via insulators (13);
a pair of bearings (30) configured to rotatably support the rotor (20);
a pair of metal brackets (15, 35) configured to fix the pair of bearings (30);
a mold resin (19) configured to cover the stator (10);
a metal cover (31) mounted on an outer surface of the mold resin (19); and
a conductive member (32) configured to electrically connect a first metal bracket (15) among the pair of metal brackets (15, 35) with the metal cover (31),
wherein the pair of metal brackets (15, 35) are electrically connected via the metal cover (31) and the conductive member (32),
the first metal bracket (15) includes a cylindrical portion (15c) that holds one of the bearings (30), and a flange portion (15b) that extends outward from one end of the cylindrical portion (15c), the cylindrical portion (15c) having a cylindrical shape, the flange portion (15b) being fixed to the mold resin,
the metal cover (31) includes a cover cylindrical portion (31c), a cover top surface portion (31t), a cover hole (31h), and a cover projecting portion (31p), the cover cylindrical portion (31c) having a cylindrical shape and surrounding an outer periphery of the mold resin, the cover top surface portion (31t) constituting one end side of the cover cylindrical portion (31c), the cover hole (31h) being defined in a center of the cover top surface portion (31t), the cover projecting portion (31p) protruding outward in a hollow cylindrical shape from the inner periphery of the cover top surface portion (31t), the cover hole (31h) is defined within the cover projecting portion (31p),
the cover hole (31h) defined in the metal cover (31) has a diameter larger than a diameter of the cylindrical portion (31c) of the first metal bracket (15),
the cylindrical portion (31c) of the first metal bracket (15) penetrates the cover hole (31h) defined in the metal cover (31) and protrudes from the cover hole (31h)
the mold motor (100) further comprises a gap (41g) between an inner periphery of the cover projecting portion (31p) and the cover top surface portion of the metal cover (31) and an outer periphery of the cylindrical portion (31c) of the first metal bracket (15) penetrating the cover hole (31h) in the radial direction, and
the conductive member (32) is provided in at least a part of the gap (41g), and electrically connects the first metal bracket (15) and the metal cover (31).

2. The mold motor (100) according to claim 1, wherein the conductive member (32) is one of a metal piece and an electric wire, and the conductive member (32) is joined to the first metal bracket (15) and the metal cover (31) by one of welding, soldering, and a conductive adhesive.

3. The mold motor (100) according to claim 1, wherein the conductive member (32) is a solder, and the first metal bracket (15) and the metal cover (31) are electrically connected by soldering to cause the solder to straddle the gap (41g).

4. The mold motor (100) according to claim 1, wherein the conductive member (32) is one of a conductive rubber, a conductive sponge, and a plate spring with spring property disposed in the gap (41g).

5. The mold motor (100) according to claim 1, wherein
the metal cover (31) further includes a cover projecting portion (31p) protruding outward in a hollow cylindrical shape from the inner periphery of the cover top surface portion (31t),
the cover projecting portion (31p) includes a plate spring portion (31ps) provided by bending a part of the cover projecting portion (31p), and
the plate spring portion (31p) is in contact with the first metal bracket (15) as the conductive member (32).

## Patentansprüche

1. Ein Formmotor (100), der Folgendes umfasst:
einen Rotor (20) mit einer sich in axialer Richtung erstreckenden Drehwelle (21) und einem Drehkörper (22), der Permanentmagnete (24) hält und an der Drehwelle (21) befestigt ist;
einen Stator (10), der dem Rotor (20) gegenüberliegt und einen Statorkern (11) mit mehreren hervorstehenden Polen und mehrere Spulen (12) umfasst, die jeweils über Isolatoren (13) um die hervorstehenden Pole des Statorkerns (11) gewickelt sind;
ein Paar Lager (30), die so konfiguriert sind, dass sie den Rotor (20) drehbar lagern;
ein Paar Metallhalterungen (15, 35), die so konfiguriert sind, dass sie das Paar Lager (30) fixieren;
ein Formharz (19), das so konfiguriert ist, dass es den Stator (10) bedeckt;
eine Metallabdeckung (31), die an einer Außenfläche des Formharzes (19) angebracht ist; und
ein leitfähiges Element (32), das so konfiguriert ist, dass es eine erste Metallhalterung (15) aus dem Paar Metallhalterungen (15, 35) elektrisch mit der Metallabdeckung (31) verbindet,
wobei das Paar Metallhalterungen (15, 35) über die Metallabdeckung (31) und das leitfähige Element (32) elektrisch verbunden ist,
wobei die erste Metallhalterung (15) einen zylindrischen Abschnitt (15c), der eines der Lager (30) hält, und einen Flanschabschnitt (15b) umfasst, der sich von einem Ende des zylindrischen Abschnitts (15c) nach außen erstreckt, wobei der zylindrische Abschnitt (15c) eine zylindrische Form aufweist und der Flanschabschnitt (15b) an dem Formharz befestigt ist,
die Metallabdeckung (31) einen zylindrischen Abdeckungsabschnitt (31c), einen Abdeckungsoberflächenabschnitt (31t), eine Abdeckungsöffnung (31h) und einen Abdeckungsvorsprungsabschnitt (31p) umfasst, wobei der zylindrische Abdeckungsabschnitt (31c) eine zylindrische Form aufweist und einen Außenumfang des Formharzes umgibt, wobei der Abdeckungsoberflächenabschnitt (31t) eine Endseite des zylindrischen Abdeckungsabschnitts (31c) bildet, wobei die Abdeckungsöffnung (31h) in einer Mitte des Abdeckungsoberflächenabschnitts (31t) definiert ist, wobei der Abdeckungsvorsprungsabschnitt (31p) in einer hohlen zylindrischen Form von dem Innenumfang des Abdeckungsoberflächenabschnitts (31t) nach außen vorsteht, wobei die Abdeckungsöffnung (31h) innerhalb des vorstehenden Teils (31p) der Abdeckung definiert ist,
wobei die in der Metallabdeckung (31) definierte Abdeckungsöffnung (31h) einen Durchmesser aufweist, der größer ist als der Durchmesser des zylindrischen Teils (31c) der ersten Metallhalterung (15),
der zylindrische Abschnitt (31c) der ersten Metallhalterung (15) durchdringt die in der Metallabdeckung (31) definierte Abdeckungsöffnung (31h) und ragt aus der Abdeckungsöffnung (31h) heraus
wobei der Formmotor (100) ferner einen Spalt (41g) zwischen einem Innenumfang des Abdeckungsvorsprungsabschnitts (31p) und dem Abdeckungsoberflächenabschnitt der Metallabdeckung (31) und einem Außenumfang des zylindrischen Abschnitts (31c) der ersten Metallhalterung (15), die in die Abdeckungsöffnung (31h) in radialer Richtung eindringt, umfasst, und
das leitfähige Element (32) in mindestens einem Teil des Spalts (41g) vorgesehen ist und die erste Metallhalterung (15) und die Metallabdeckung (31) elektrisch verbindet.

2. Der Formmotor (100) gemäß Anspruch 1, wobei das leitfähige Element (32) entweder ein Metallstück oder ein elektrischer Draht ist und das leitfähige Element (32) durch Schweißen, Löten oder einen leitfähigen Klebstoff mit der ersten Metallhalterung (15) und der Metallabdeckung (31) verbunden ist.

3. Der Formmotor (100) gemäß Anspruch 1, wobei das leitfähige Element (32) ein Lot ist und die erste Metallhalterung (15) und die Metallabdeckung (31) durch Löten elektrisch verbunden sind, so dass das Lot den Spalt (41g) überbrückt.

4. Der Formmotor (100) gemäß Anspruch 1, wobei das leitfähige Element (32) entweder ein leitfähiger Gummi, ein leitfähiger Schwamm oder eine Plattenfeder mit Federeigenschaften ist, die in dem Spalt (41g) angeordnet ist.

5. Der Formmotor (100) gemäß Anspruch 1, wobei
die Metallabdeckung (31) ferner einen Abdeckungsvorsprungsabschnitt (31p) umfasst, der in einer hohlzylindrischen Form von der Innenumfangsfläche des Abdeckungsoberflächenabschnitts (31t) nach außen vorsteht,
der Abdeckungsvorsprungsabschnitt (31p) einen Plattenfederabschnitt (31ps) umfasst, der durch Biegen eines Teils des Abdeckungsvorsprungsabschnitts (31p) bereitgestellt wird, und
der Plattenfederabschnitt (31p) mit der ersten Metallhalterung (15) als leitfähiges Element (32) in Kontakt steht.

## Revendications

1. Moteur (100) moulé comprenant :
un rotor (20) incluant un arbre rotatif (21) s'étendant dans une direction axiale, et un corps rotatif (22) qui maintient des aimants (24) permanents et est fixé à l'arbre rotatif (21) ;
un stator (10) qui fait face au rotor (20), et inclut un noyau de stator (11) présentant une pluralité de pôles saillants, et une pluralité de bobines (12) enroulées respectivement autour des pôles saillants du noyau de stator (11) par l'intermédiaire d'isolateurs (13) ;
une paire de paliers (30) configurés pour supporter en rotation le rotor (20) ;
une paire de ferrures (15, 35) en métal configurées pour fixer la paire de paliers (30) ;
une résine de moulage (19) configurée pour recouvrir le stator (10) ;
un couvercle en métal (31) monté sur une surface extérieure de la résine de moulage (19) ; et
un élément conducteur (32) configuré pour raccorder électriquement une première ferrure (15) en métal parmi la paire de ferrures (15, 35) en métal au couvercle en métal (31),
dans lequel la paire de ferrures (15, 35) en métal sont raccordées électriquement par l'intermédiaire du couvercle en métal (31) et de l'élément conducteur (32),
la première ferrure (15) en métal inclut une portion cylindrique (15c) qui maintient l'un des paliers (30), et une portion bride (15b) qui s'étend vers l'extérieur à partir d'une extrémité de la portion cylindrique (15c), la portion cylindrique (15c) présentant une forme cylindrique, la portion bride (15b) étant fixée à la résine de moulage,
le couvercle en métal (31) inclut une portion cylindrique de couvercle (31c), une portion surface supérieure de couvercle (31t), un trou de couvercle (31h), et une portion saillante de couvercle (31p), la portion cylindrique de couvercle (31c) présentant une forme cylindrique et entourant une périphérie extérieure de la résine de moulage, la portion surface supérieure de couvercle (31t) constituant un côté d'extrémité de la portion cylindrique (31c) de couvercle, le trou de couvercle (31h) étant défini au centre de la portion surface supérieure de couvercle (31t), la portion saillante de couvercle (31p) faisant saillie vers l'extérieur sous une forme cylindrique creuse à partir de la périphérie intérieure de la portion surface supérieure de couvercle (31t), le trou du couvercle (31h) étant défini au sein de la portion saillante de couvercle (31p),
le trou de couvercle (31h) défini dans le couvercle en métal (31) présente un diamètre supérieur à un diamètre de la portion cylindrique (31c) de la première ferrure (15) en métal,
la portion cylindrique (31c) de la première ferrure (15) en métal pénètre le trou de couvercle (31h) défini dans le couvercle en métal (31) et fait saillie à partir du trou de couvercle (31h),
le moteur moulé (100) comprend en outre un espace (41g) entre une périphérie intérieure de la portion saillante de couvercle (31p) et la portion surface supérieure de couvercle du couvercle en métal (31) et une périphérie extérieure de la portion cylindrique (31c) de la première ferrure (15) en métal pénétrant le trou de couvercle (31h) dans la direction radiale, et
l'élément conducteur (32) est prévu dans au moins une partie de l'espace (41g), et raccorde électriquement la première ferrure (15) en métal et le couvercle en métal (31).

2. Moteur (100) moulé selon la revendication 1, dans lequel l'élément conducteur (32) est soit une pièce en métal, soit un fil électrique, et l'élément conducteur (32) est joint à la première ferrure (15) en métal et au couvercle en métal (31) par soudage, brasage, ou adhésif conducteur.

3. Moteur (100) moulé selon la revendication 1, dans lequel l'élément conducteur (32) est une brasure, et la première ferrure (15) en métal et le couvercle en métal (31) sont raccordés électriquement par brasage pour amener la brasure à enjamber l'espace (41g).

4. Moteur (100) moulé selon la revendication 1, dans lequel l'élément conducteur (32) est l'un parmi un caoutchouc conducteur, une éponge conductrice, et un ressort à lame avec une propriété élastique disposé dans l'espace (41g).

5. Moteur (100) moulé selon la revendication 1, dans lequel
le couvercle en métal (31) inclut en outre une portion saillante de couvercle (31p) faisant saillie vers l'extérieur sous une forme cylindrique creuse à partir de la périphérie intérieure de la portion surface supérieure de couvercle (31t),
la portion saillante de couvercle (31p) inclut une portion ressort à lame (31ps) obtenue par flexion d'une partie de la portion saillante de couvercle (31p), et
la portion ressort à lame (31ps) est en contact avec la première ferrure (15) en métal en tant qu'élément conducteur (32).
